# EUROPÄISCHE PATENTANMELDUNG

(11) **EP 1 249 411 A2**
(43) Veröffentlichungstag der Anmeldung: **16.10.2002**
(21) Anmeldenummer: 02006253.5
(22) Anmeldetag: 20.03.2002
(51) Int. Cl.: B65G 53/30, B29C 31/00, B29B 9/06

(54) **Verfahren und Vorrichtung zur Förderung von Kunststoff-Granulat**

(30) Priorität: 05.04.2001 DE 10116910
(71) Anmelder: Coperion Waeschle GmbH & Co. KG, 88250 Weingarten (DE)
(72) Erfinder: Stark, Bernhard, Dr., 88273 Fronreute (DE); Hustert, Olaf, 88250 Weingarten (DE); Burkes, Mike, 88214 Ravensburg (DE); Wiedmann, Manfred, 87549 Rettenberg (DE); Hilgert, Knut, 88250 Weingarten (DE)
(74) Vertreter: Rau, Manfred, Dr. Dipl.-Ing.

(57) **Zusammenfassung**

Bei der Herstellung von Kunststoff-Granulaten wird eine Kunststoffschmelze zu Granulaten geformt und über eine kurze Entfernung pneumatisch zu mindestens einem Mischsilo (10) gefördert, dort homogenisiert, im Anschluss daran mit einer Förderflüssigkeit vermischt und nachfolgend hydraulisch über eine um eine Vielfaches größere Entfernung zu einem Zielort (19) in Form eines oder mehrerer Lagersilos (24) weitergefördert. Vor der Einspeisung in die Lagersilos (24) wird das Granulat von der Förderflüssigkeit getrennt.

## Beschreibung

Die Erfindung betrifft ein Verfahren nach dem Oberbegriff des Anspruchs 1 und eine Vorrichtung zur Durchführung des Verfahrens nach dem Oberbegriff des Anspruchs 3.

Ein gattungsgemäßes Verfahren ist aus der Praxis bekannt. Das bei der Herstellung thermoplastischer Kunststoffen im Reaktor anfallende grießförmige Produkt wird in einem Extruder plastifiziert und in einem Granulierwerkzeug zu Einzelsträngen ausgeformt, die mittels eines im Granulierwerkzeug rotierenden Messers zu Granulaten geschnitten werden. Das Granulieren kann beispielsweise in einem Flüssigkeitsstrom erfolgen, der die Granulate kühlt und ein Agglomerieren weitgehend vermeidet. Anschließend wird das Granulat getrocknet und gesiebt, um trotz Kühlung gebildete Agglomerate abzuscheiden. Nachfolgend wird das Produkt pneumatisch zu einem Mischsilo gefördert. Dieser befindet sich in der Regel mittig zwischen der Granulierung und dem Zielort, einer Anordnung von Lagersilos. Das Granulat wird im Mischsilo zum Ausgleich von Schwankungen im Herstellprozess homogenisiert und nachfolgend pneumatisch in die Lagersilos transportiert. Um bei der pneumatischen Förderung oder beim Mischen gebildeten, staubförmigen Abrieb abzuscheiden, kann das Fördergut vor dem Eintritt in die Lagersilos noch einer Windsichtung unterzogen werden.

Da Windsichter jedoch stets nur eine Teilmenge des durch Abrieb gebildeten Staubs abscheiden, ist die Reinheit des Granulats für bestimmte Anwendungen unzureichend. Die Aufteilung des Gesamtförderwegs auf zwei etwa gleich lange pneumatische Förderwege ist auf die bedingte Eignung dieses Verfahrens für die Förderung großer Schüttgutmengen über weite Entfernungen zurückzuführen. Der Mischsilo ist daher nicht im Umfeld der Kunststoffproduktion und der Granulierung angeordnet, wodurch Maßnahmen zur Qualitätssicherung erheblich erschwert werden.

Aus der DE 198 50 885 C1 ist ein Verfahren zur hydraulischen Förderung von Kunststoff-Granulat bekannt, bei dem das Granulat in einem Rührbehälter kontinuierlich mit einer Förderflüssigkeit zu einer Dispersion vermischt und nachfolgend hydraulisch zu einem Zielort gefördert wird. Dort werden Granulat und Förderflüssigkeit voneinander getrennt. In einem Trockner wird die Oberflächenfeuchte des Granulats anschließend im wesentlichen entfernt, während die Förderflüssigkeit zum Rührbehälter zurückgeleitet wird. Die hydraulische Förderung ist über große Entfernungen leistungsstärker, verbraucht deutlich weniger Energie und erzeugt darüber hinaus geringeren Abrieb als die pneumatische Förderung. Durch die kontinuierliche Abförderung der Dispersion wird jedoch eine Differenzierung fehlerhaften Granulats erschwert, so dass gegebenenfalls erhebliche Mengen an sich mängelfreien Granulats mit diesem kontaminiert und damit im Wert gemindert werden. Darüber hinaus kann der Rührbehälter wegen seines geringen Volumens das Granulat nur bedingt homogenisieren.

Aus der DE 43 35 225 C1 ist ein Verfahren und eine Vorrichtung zum Trocknen und Fördern von Kunststoff-Granulat bekannt. Hierbei wird das Granulat zwischen einem Trockner und einem Abscheider pneumatisch gefördert.

Der vorliegenden Erfindung liegt die Aufgabe zugrunde, das gattungsgemäße Verfahren so weiterzubilden, dass die Qualität des am Zielort empfangenen Kunststoff-Granulats verbessert wird und eine Vorrichtung zur Durchführung des Verfahrens anzugeben.

Diese Aufgabe wird erfindungsgemäß bei einem Verfahren der gattungsgemäßen Art durch die Merkmale im Kennzeichnungsteil des Anspruchs 1 gelöst.

Bei einer Vorrichtung der gattungsgemäßen Art wird die Aufgabe durch die Merkmale im Kennzeichnungsteil des Anspruchs 3 gelöst.

Die Unteransprüche betreffen vorteilhafte Weiterbildungen der Erfindung.

Nachfolgend werden Ausführungsbeispiele der Erfindung anhand der Zeichnung näher erläutert. Es zeigt:
- Figur 1: eine erste Vorrichtung zur Förderung von KunststoffGranulat,
- Figur 2: eine gegenüber Figur 1 nur leicht ergänzte zweite Vorrichtung zur Förderung von Kunststoff-Granulat und,
- Figur 3: eine gegenüber der zweiten Vorrichtung geringfügig ergänzte dritte Vorrichtung zur Förderung von Kunststoff-Granulat und
- Figur 4: eine gegenüber der zweiten Vorrichtung geringfügig abgewandelte vierte Vorrichtung zur Förderung von KunststoffGranulat.

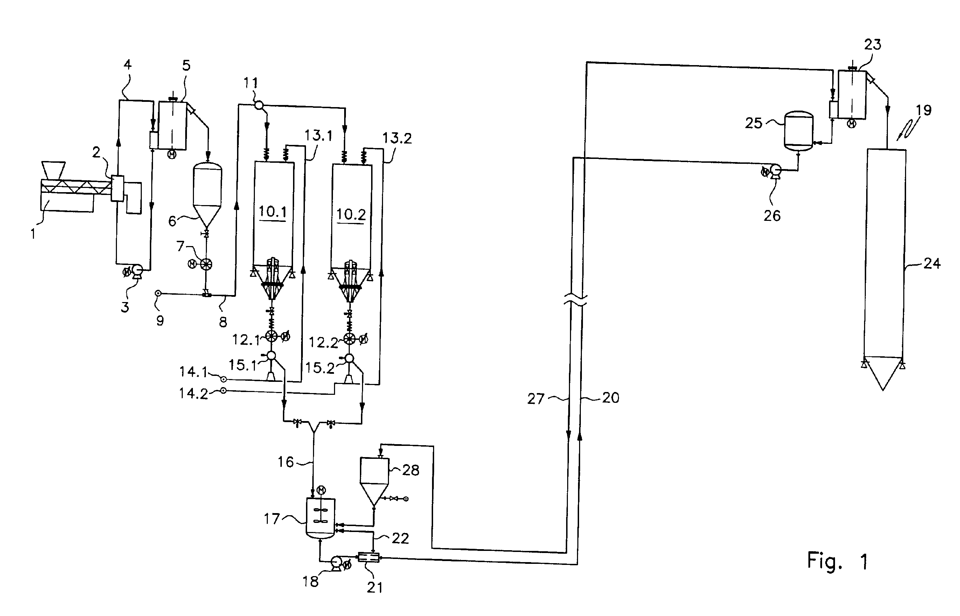

Wie aus Figur 1 ersichtlich ist, wird der in einem Reaktor gewonnene, thermoplastische Kunststoffgrieß in einem Extruder 1 durch Friktion und Zufuhr äußerer Wärme aufgeschmolzen und mit Zuschlagstoffen vermischt. In einem Granulierwerkzeug 2 wird die Kunststoffschmelze in Einzelstränge aufgeteilt, in einen Kühlflüssigkeitsstrom eingetragen und mittels eines rotierenden Messer in Granulate zerschnitten. Der von einer Pumpe 3 zugeführte, in einer Ringleitung 4 zirkulierende Kühlflüssigkeitsstrom verhindert das Agglomerieren der Granulate und führt diese einem Trockner 5 zu. Dort werden die Granulate aus der Kühlflüssigkeit abgeschieden und in einem Vorratsbehälter 6 gesammelt, während die Kühlflüssigkeit zur Pumpe 3 zurückfließt.

Eine Zellenradschleuse 7 speist das trockene Granulat aus dem Vorratsbehälter 6 in eine pneumatische Förderleitung 8 ein, in der es unter der Wirkung eines von einer Druckgasquelle 9 bereitgestellten Druckgasstroms über eine relativ kurze Entfernung, beispielsweise 50 bis 100 m, wahlweise zu einem von mehreren Mischsilos 10.1, 10.2 gefördert wird. Infolge der kurzen Förderdistanz wird nur eine geringe Menge an Kunststoff-Abrieb erzeugt, der bei der pneumatischen Förderung durch den Kontakt zwischen Granulat und Förderleitung 8 zwangsläufig entsteht.

Die Beschickung des betreffenden Mischsilos 10.1, 10.2 erfolgt durch Verstellen einer in der Förderleitung 8 angeordneten Weiche 11.

In den Mischsilos 10.1, 10.2 wird das Granulat gesammelt, mehrfach von Zellenradschleusen 12.1, 12.2 in zugeordnete Steigleitungen 13.1, 13.2 eingespeist und dem betreffenden Mischsilo 10.1, 10.2 erneut zugeführt. Durch dieses Umwälzen werden produktionsbedingte Schwankungen in den Eigenschaften des Granulats ausgeglichen, so dass dem späteren Verarbeiter ein homogenes Produkt zur Verfügung steht. Das hierzu notwendige Druckgas wird Druckgasquellen 14.1, 14.2 entnommen. Bezüglich der Funktion derartiger Mischsilos wird auf die DE 41 12 884 C2 verwiesen.

Im Bereich der nahe dem Extruder 1 mit Granulierwerkzeug 2 angeordneten Mischsilos 10 wird die Granulatqualität fortlaufend überwacht. Ist eine ausreichende Homogenität des Granulats herbeigeführt worden, kann der Inhalt des betreffenden Mischsilos 10 durch Verstellen der Weichen 15.1, 15.2 unter Schwerkraftwirkung durch eine Fallleitung 16 einem Rührbehälter 17 zugeführt werden, in dem das Granulat mit einer Förderflüssigkeit vermischt wird. Die Dispersion wird nachfolgend von einer Pumpe 18 über eine gegebenenfalls sehr große Entfernung, beispielsweise 500 m bis einige Kilometer, durch eine Förderleitung 20 zu einem Zielort 19 gefördert. Unmittelbar stromab der Pumpe 18 wird in einem Siebrohr 21 der Dispersion ein Teil der Förderflüssigkeit entnommen, wodurch deren Feststoffgehalt erhöht wird, so dass der zum Zielort zu fördernde Volumenstrom abnimmt. Die entnommene Flüssigkeitsmenge wird durch eine Rückleitung 22 wieder in den Rührbehälter 17 eingespeist. Eine derartige Einrichtung wird in der DE 197 55 733 A1 ausführlich beschrieben.

Am Zielort 19 befindet sich ein zweiter Trockner 23, in dem das Granulat von der Förderflüssigkeit getrennt und danach einem Lagersilo 24 zugeführt wird. Die Förderflüssigkeit wird in einem Zwischenbehälter 25 aufgefangen und mittels einer Pumpe 26 durch eine Rückleitung 27 in einen Speicher 28 gepumpt, aus dem es erneut in den Rührbehälter 17 eingespeist werden kann.

Da die Qualitätssicherung nahe dem Extruder 1 mit Granulierwerkzeug 2 durchgeführt wird und der Inhalt eines Mischsilos 10 jeweils erst nach der Freigabe zum Zielort 19 gefördert wird, kann ausgeschlossen werden, dass der Inhalt der großvolumigen Lagersilos 24 durch mangelhaftes Granulat beeinträchtigt wird. Außerdem kann die hohe Förderleistung der hydraulischen Förderung zur zügigen Abförderung des im Mischsilo 10 gesammelten Schüttguts ausgenutzt werden, welche die Produktionsleistung des Extruders 1 mit Granulierwerkzeug 2 bei weitem übersteigt.

Da bei der schonenden hydraulischen Förderung durch die geringe Sinkgeschwindigkeit des Granulats und die Schmierfähigkeit der Förderflüssigkeit im wesentlichen kein Kunststoff-Abrieb erzeugt wird, kann am Zielort 19 in der Regel auf den Einsatz einer Sichteinrichtung zur Staubabscheidung verzichtet werden. Insbesondere entsteht bei der hydraulischen Förderung kein metallischer Abrieb an der Förderleitung 20. Aus der vorhergehenden pneumatischen Förderung sowie dem Mischprozess stammende Verunreinigungen werden bei der hydraulischen Förderung weitgehend entfernt.

Überraschenderweise bereitet die Trocknung des Granulats am Zielort trotz der langen Verweilzeit des Granulats in der Förderflüssigkeit keinerlei Schwierigkeiten, da das Granulat bei der hydraulischen Förderung kaum geschädigt wird und daher ein glattes Äußeres mit einer entsprechend geringen Oberfläche aufweist. Die Menge der abzuführenden Oberflächenfeuchtigkeit, die bei einer nachfolgenden Lagerung oder Verpackung des Granulats kondensieren kann, ist daher vergleichsweise gering.

Die geringen Mengen der in das Innere des Granulats eindiffundierten Förderflüssigkeit beeinträchtigen die Granulatqualität hingegen kaum. Die Diffusion wird ferner wegen der niedrigen Temperatur der hydraulisch geförderten Dispersion stark herabgesetzt. Die Temperatur der Dispersion kann insbesondere deshalb herabgesetzt werden, weil die Abscheidung der Oberflächenfeuchtigkeit vom glatten Granulat aus den zuvor genannten Gründen nicht zu Problemen führt. Es ist daher nicht erforderlich, eine Nachtrocknung durch hohe Eigenwärme des Granulatkorns zu bewirken.

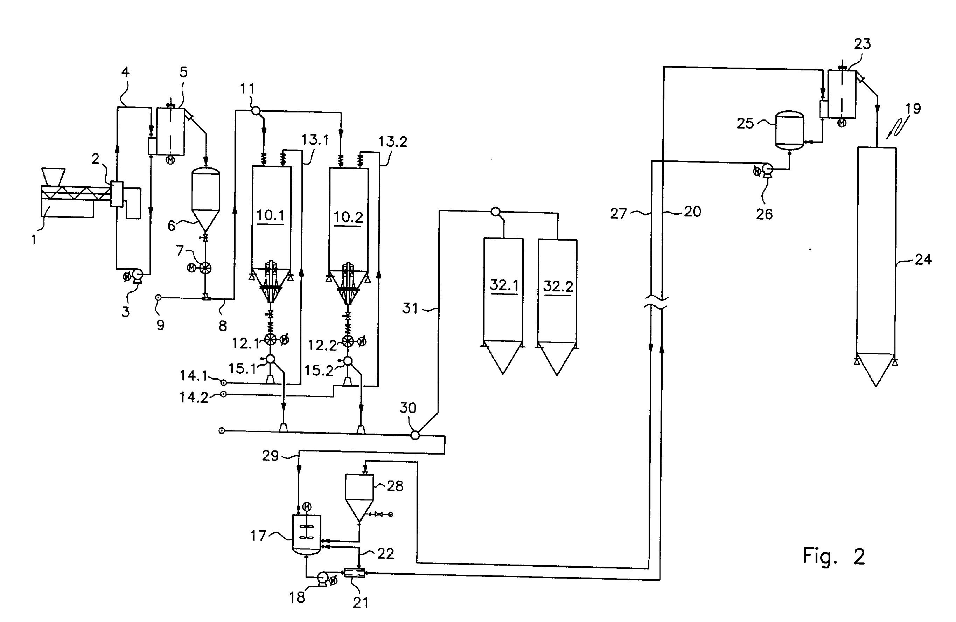

Die Vorrichtung nach Figur 2 unterscheidet sich von der nach Figur 1 nur dadurch, dass das Granulat aus den Mischsilos 10.1 bzw. 10.2 nicht unter Schwerkraft durch eine Fallleitung 16 zugeführt wird, sondern durch eine pneumatische Förderung in einer Förderleitung 29. Der Grund liegt darin, dass das Granulat wahlweise dem Rührbehälter 17 oder über eine Weiche 30 und eine Förderleitung 31 weiteren Behältern 32.1 und 32.2 zugeführt wird. Über die Weiche 30 kann also Granulat aus der bereits geschilderten Gesamt-Förderstrecke abgezweigt werden.

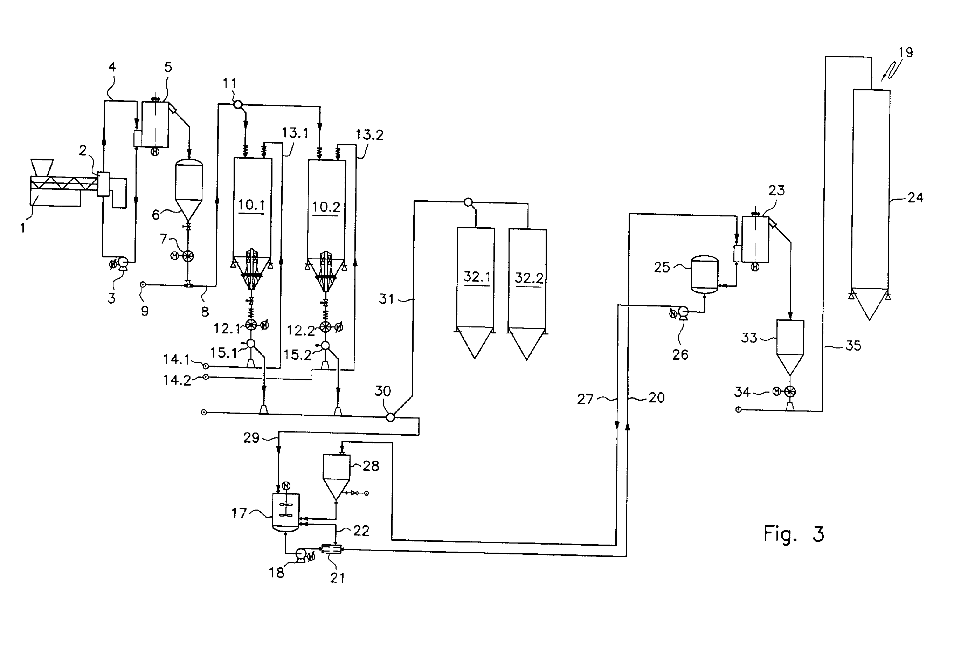

Die Vorrichtung nach Figur 3 unterscheidet sich von der nach Figur 2 wiederum dadurch, dass dem Trockner 23 eine pneumatische Förderung zum Lagersilo 24 am Zielort 19 nachgeordnet ist. Hierzu wird das Granulat aus dem Trockner 23 einem Zwischenbehälter 33 zugeführt, aus dem es wiederum mittels einer Zellenradschleuse 34 in eine pneumatische Förderleitung 35 eingespeist wird, die in den Lagersilo 24 mündet. Diese Lösung wird beispielsweise dann angewendet, wenn der Trockner 23 aus räumlichen Gründen nicht oberhalb des oder der Lagersilos 24 angeordnet werden kann. Bei dieser nachgeordneten pneumatischen Förderung kann auch noch eine eventuell noch notwendige Resttrocknung gegebenenfalls noch vorhandener Oberflächenfeuchte erfolgen.

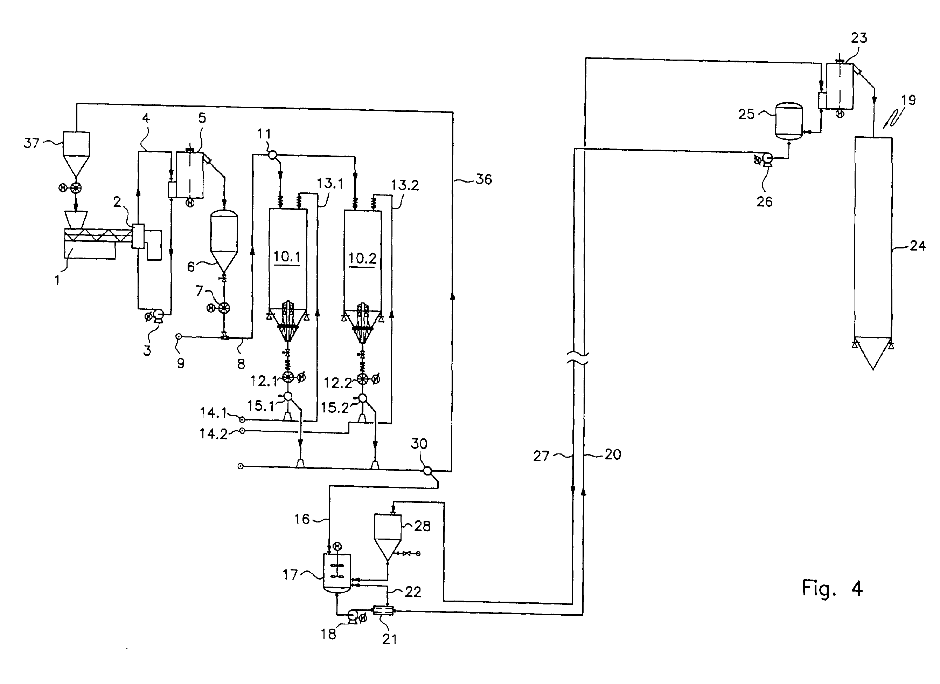

Die Vorrichtung nach Figur 4 unterscheidet sich von der nach Figur 2 dadurch, dass von der Weiche 30 eine Förderleitung 36 zurück zur Granulat-Herstellung führt. Angedeutet ist dies durch einen dem Extruder 1 vorgeordneten Vorrats-Behälter 37, in den über die Förderleitung 36 mangelhaftes Granulat, das bei der Qualitätskontrolle ausgesondert worden ist, zurückgefördert wird.
- 1: Extruder
- 2: Granulierwerkzeug
- 3: Pumpe
- 4: Ringleitung
- 5: Trockner
- 6: Vorratsbehälter
- 7: Zellenradschleuse
- 8: Förderleitung
- 9: Druckgasquelle
- 10: Mischsilo
- 11: Weiche
- 12: Zellenradschleuse
- 13: Steigleitung
- 14: Druckgasquelle
- 15: Weiche
- 16: Fallleitung
- 17: Rührbehälter
- 18: Pumpe
- 19: Zielort
- 20: Förderleitung
- 21: Siebrohr
- 22: Rückleitung
- 23: Trockner
- 24: Lagersilo
- 25: Zwischenbehälter
- 26: Pumpe
- 27: Rückleitung
- 28: Speicher
- 29: Förderleitung
- 30: Weiche
- 31: Förderleitung
- 32: Silo
- 33: Zwischenbehälter
- 34: Zellenradschleuse
- 35: pneumat. Förderleitung
- 36: Förderleitung
- 37: Vorrats-Behälter

## Patentansprüche

1. Verfahren zur Herstellung von Kunststoff-Granulaten, bei dem eine Kunststoffschmelze zu Granulaten geformt und zu mindestens einem Mischsilo (10) gefördert wird, nachfolgend im Mischsilo homogenisiert und zu einem Zielort (19) in Form eines oder mehrerer Lagersilos (24) weitergefördert wird,
**dadurch gekennzeichnet,**
**dass** die Granulate über eine kurze Entfernung pneumatisch zu den Mischsilos (10) gefördert werden, im Anschluss an die Homogenisierung mit einer Förderflüssigkeit vermischt, nachfolgend hydraulisch über eine um ein Vielfaches größere Entfernung zum Zielort (19) gefördert und vor der Einspeisung in die Lagersilos (24) von der Förderflüssigkeit getrennt werden.

2. Verfahren nach Anspruch 1, **dadurch gekennzeichnet,**
**dass** die Granulate in den Mischsilos (10) einem Umwälz-Misch-Prozess unterzogen werden und dass jeweils der Inhalt eines Mischsilos hydraulisch zum Zielort (19) gefördert wird.

3. Vorrichtung zur Durchführung des Verfahrens nach Anspruch 1, mit einer Einrichtung zur Herstellung von Kunststoff-Granulaten, mindestens einem Mischsilo (10) und einem Zielort (19) in Form mindestens eines Lagersilos (24), wobei die Einrichtung zur Herstellung der Granulate mit dem mindestens einen Mischsilo durch eine erste Förderleitung (8) und der mindestens eine Mischsilo mit dem Zielort durch eine zweite Förderleitung (20) miteinander verbindbar sind,
**dadurch gekennzeichnet,**
**dass** der mindestens eine Mischsilo (10) mit einer Einrichtung zur Dispergierung des Granulates mit Förderflüssigkeit verbindbar ist und **dass** zwischen der zweiten Förderleitung (20) und dem mindestens einen Lagersilo (24) eine Abscheideeinrichtung für die Förderflüssigkeit angeordnet ist.

4. Vorrichtung nach Anspruch 3, **dadurch gekennzeichnet,**
**dass** der mindestens eine Mischsilo (10) als Umwälzmischer ausgebildet ist.

5. Vorrichtung nach Anspruch 3 oder 4, **dadurch gekennzeichnet,**
**dass** die Einrichtung zur Dispergierung des Granulates mit Förderflüssigkeit ein Rührbehälter (17) ist.

6. Vorrichtung nach einem der Ansprüche 3 bis 5, **dadurch gekennzeichnet,**
**dass** die Abscheideeinrichtung für die Förderflüssigkeit ein Trockner (23) ist.

7. Vorrichtung nach einem der Ansprüche 3 bis 6, **dadurch gekennzeichnet,**
**dass** zwischen dem mindestens einem Mischsilo (10) und der Einrichtung zur Dispergierung des Granulates mit Förderflüssigkeit eine Einrichtung zur pneumatischen Förderung des Granulats mit einer pneumatischen Förderleitung (29) vorgesehen ist.

8. Vorrichtung nach Anspruch 7, **dadurch gekennzeichnet,**
**dass** in der Förderleitung (29) eine Weiche (30) angeordnet ist, von der eine Förderleitung (31, 36) zu mindestens einem Behälter (32.1, 32.2, 37) führt.

9. Vorrichtung nach einem der Ansprüche 3 bis 8, **dadurch gekennzeichnet,**
**dass** zwischen dem Trockner (23) und dem Zielort (19) eine pneumatische Fördereinrichtung vorgesehen ist.
